**Europäisches Patentamt**

**European Patent Office**

**Office européen des brevets**

(19)

(11) Numéro de publication: **0 029 574**
**B1**

(12) **FASCICULE DE BREVET EUROPEEN**

(45) Date de publication du fascicule du brevet: **23.11.83**

(51) Int. Cl.³: **H 04 M 1/50**

(21) Numéro de dépôt: **80107158.0**

(22) Date de dépôt: **18.11.80**

(54) Clavier d'appel de poste téléphonique automatique utilisant des techniques analogiques.

(30) Priorité: **23.11.79 FR 7928900**

(43) Date de publication de la demande:
**03.06.81 Bulletin 81/22**

(45) Mention de la délivrance du brevet:
**23.11.83 Bulletin 83/47**

(84) Etats contractants désignés:
**AT BE CH DE FR GB IT LI LU NL SE**

(56) Documents cités:
**DE - A - 2 453 880**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Suszylo, Jacky**
**10, rue Albert Fririon**
**F-92220 Bagneux (FR)**

(74) Mandataire: **Weinmiller, Jürgen et al,**
**Zeppelinstrasse 63**
**D-8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Clavier d'appel de poste téléphonique automatique utilisant des techniques analogiques

La présente invention concerne un clavier d'appel de poste téléphonique automatique et notamment un clavier d'appel utilisant un signal composite, somme de deux signaux sinusoïdaux de fréquences vocales différentes servant à localiser l'abonné demandé.

Les claviers d'appel à fréquences vocales fonctionnant par pression sur une touche provoquant l'émission simultanée de deux fréquences sont connus et conformes à l'avis Q23 du CCITT. Par exemple la demande de brevet allemand 2 453 880 décrit un générateur à deux fréquences utilisant des commutateurs à transistors dans des circuits résonnants LC commandés par bouton-poussoir. Il est connu de ce document un appareil à touches comportant entre autres:

— un ensemble de lignes et de colonnes conductrices aux points de croisement desquelles les touches sont situées et pourvues à l'une de leurs extrémités d'un commutateur à transistor,
— un commutateur à transistor en état de blocage ou de conduction suivant qu'une touche est enfoncée ou relâchée,
— un double oscillateur en état d'oscillation ou de blocage suivant qu'une touche est enfoncée ou relâchée.

Cependant dans les dispositifs antérieurs la manipulation simultanée de deux touches par mégarde crée des désordres lors de l'appel téléphonique.

Le clavier selon la présente invention remédie à cet inconvénient. Dans celui-ci en effet le procédé employé permet une inhibition de l'oscillateur lorsque des touches sont enfoncées en même temps.

La présente invention a pour objet un clavier d'appel de poste téléphonique automatique comportant un clavier comprenant un ensemble de lignes et de colonnes conductrices et au moins dix touches situées au point d'intersection desdites lignes et colonnes et apte chacune à mettre en contact un colonne parmi quatre avec une ligne parmi quatre dont les colonnes sont alimentées au travers d'un régulateur de tension possédant une sortie à basse impédance et d'un pont de Graetz mis à la masse alimentant ledit régulateur suivant l'une de ses paires de bornes, la ligne téléphonique alimentant ledit pont suivant l'autre de ses deux paires de bornes et comportant en amont dudit pont la sonnerie de l'appareil et en aval les circuits de microphone et d'écouteur, chacune desdites lignes comportant à l'une de ses extrémités un commutateur à transistor apte à relier à la masse une résistance correspondante d'un double oscillateur émettant l'une des quatre fréquences inférieures FI et chacune desdites colonnes comportant à l'extrémité opposée dudit regulateur de tension un commutateur à transistor apte à relier à la basse impédance dudit régulateur une résistance correspondante dudit double oscillateur émettant en outre l'une des quatre fréquences supérieures FS, l'émission du groupe des deux fréquences, inférieure FI et supérieure FS, n'étant rendue possible que par le contact de ladite touche, caractérisé en ce que les autres extrémités desdites lignes sont reliées aux entrées non inverseuses + d'un premier et d'un deuxième comparateurs en parallèle dont les entrées inverseuses — des comparateurs sont chacune reliée à la sortie d'un diviseur de tension respectivement alimenté par la sortie basse impédance dudit régulateur de tension et dont les sorties respectives ne constituent l'alimentation en tension positive et négative dudit double oscillateur que lorsqu'une seule touche est enfoncée, lesdits premier et deuxième comparateurs fournissant tous les deux une tension négative inhibant le double oscillateur lorsqu'aucune touche n'est enfoncée et fournissant tous les deux une tension positive inhibant le double oscillateur lorsque par mégarde deux touches sont enfoncées à la fois, et en ce qu'un troisième comparateur, recevant sur son entrée inverseuse — le signal de sortie dudit premier comparateur, son entrée non inverseuse + étant reliée au point commun de deux résistances connectées d'une part à la masse et connectées d'autre part à la sortie basse impédance dudit régulateur de tension, délivre une tension de blocage ou de conduction respectivement selon qu'au moins une touche est enfoncée ou relâchée, à un premier commutateur à transistor disposé entre le point de Graetz et le circuit de microphone en série dans l'un des fils de ladite ligne téléphonique de manière à conduire dans un premier sens microphone-pont de Graetz et en ce que ledit premier comparateur délivre une tension de blocage ou de conduction respectivement selon qu'au moins une touche est enfoncée ou relâchée à un deuxième commutateur à transistor disposé en parallèle sur ledit premier commutateur de manière à conduire dans le sens inverse audit premier sens.

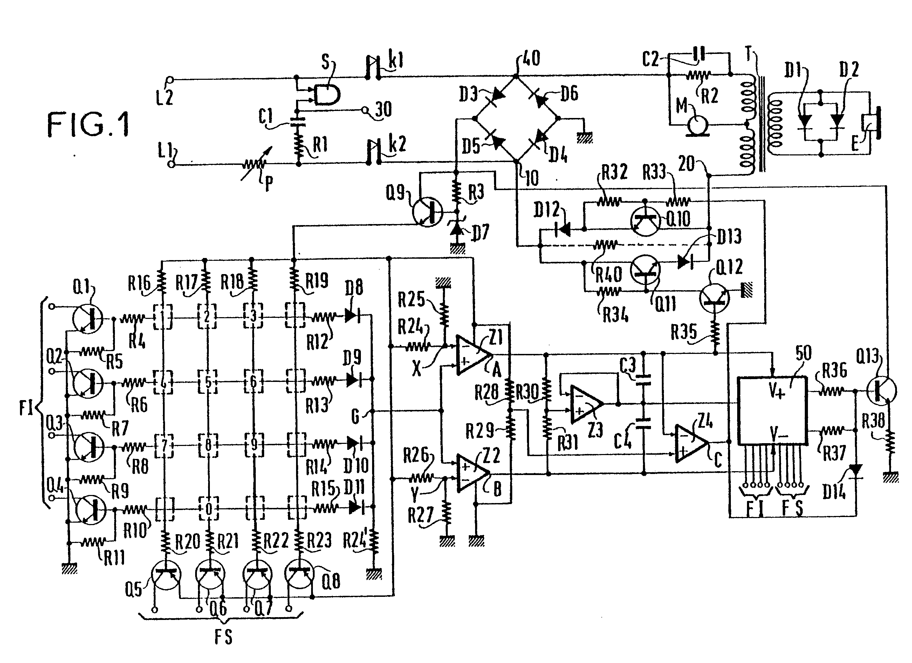

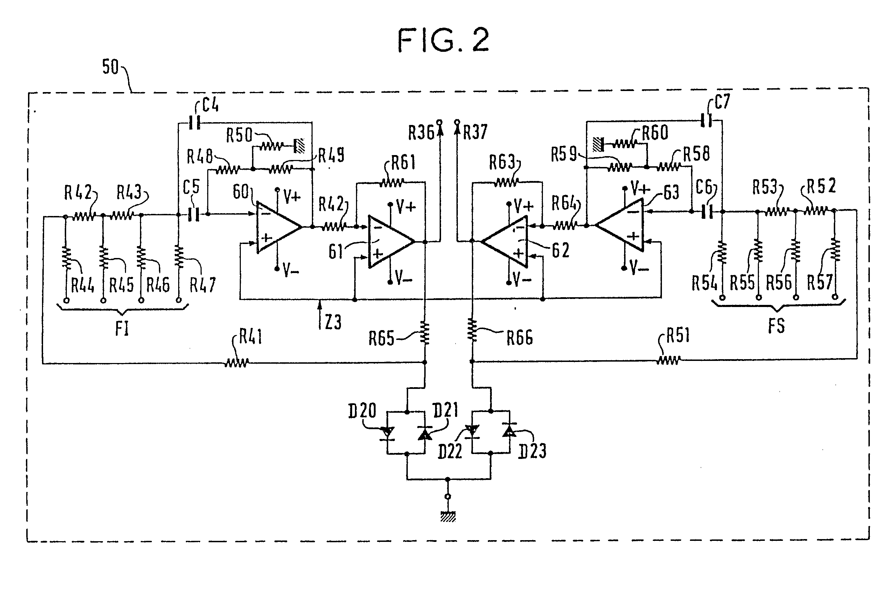

L'invention sera mieux comprise à l'étude de l'exemple donné ci-après en référence au dessin annexé dans lequel la figure 1 représente un schéma de principe électrique et électronique d'un poste téléphonique automatique avec un dispositif d'appel selon l'invention et la figure 2 représente un schéma de principe du double oscillateur du clavier d'appel utilisé dans ce dispositif.

Sur la figure 1 on voit une ligne téléphonique à deux fils $L_1$ et $L_2$. Les bornes $L_1$ et $L_2$ peuvent être portées indifféremment à la polarité positive ou négative pour l'alimentation du poste téléphonique La ligne $L_1$ $L_2$ trans-

met également le courant alternatif de sonnerie, la sonnerie du poste étant représentée par S avec le condensateur $C_1$ et la résistance $R_1$ ainsi que les courants de conversation produits par le microphone M en parallèle sur le primaire d'un transformateur T et reçus par l'écouteur E en parallèle sur le secondaire du transformateur T. Les contacts $k_1$ et $k_2$ sont mis en oeuvre en posant le combiné téléphonique. Les contacts sont ouverts en position de veille lorsque le combiné est accroché et fermés en position décrochée ou de conversation. Un potentiomètre P permet de régler le courant de ligne.

Tous les éléments précités existent sur un poste téléphonique automatique du modèle ancien à cadran électromagnétique fonctionnant grâce à des impulsions calibrées dépendant directement du numéro sélectionné. L'invention consiste à adapter un clavier d'appel à touches engendrant une modulation de fréquence du courant deligne en branchant celui-ci aux points 10, 20, 30 et 40 aux lieu et place de l'ancien cadran.

Entre les points 10 et 40 et la masse est disposée un pont de Graetz D3, D4, D5, D6 dont la borne de sortie comprise entre D3 et D5 est à un potentiel positif quel que soit le branchement et par conséquent la polaritée des fils $L_1$, $L_2$ de la ligne.

Ce potentiel est régulé par un régulateur de tension constitué d'un transistor Q9, de la résistance R3 et de la diode Zener D7. L'émetteur du transistor Q9 délivre une tension régulée à basse impédance aux différents organes du clavier d'appel. Cette tension est appliquée d'une part aux résistances R16 à R19 disposées aux extrémités des quatre colonnes d'une matrice de commutation mise en oeuvre par l'enforcement de ses 16 touches comportant en particulier les chiffres 1 à 9 et 0 et d'autre part aux émetteurs des transistors PNP Q5 à Q8 disposés ainsi que les résistances R20 à R23 aux autres extrémités des quatre colonnes. Les lignes de la matrice de commutation comportent à l'une de leurs extrémités des transistors NPN Q1 à Q4 avec leurs ponts de résistance R4 à R11. Les émetteurs des transistors Q1 à Q4 sont reliés à la masse. Les autres extrémités des lignes aboutissent au travers des résistances R12 à R15 et des diodes D8 à D11 à un point commun G relié à la masse par la résistance R24'.

La tension régulée à basse impédance venant du transistor Q9 est divisée d'une part par un pont R24—R25 de façon à établir une référence X à l'entrée inverseuse (—) d'un comparateur $Z_1$, l'entrée non inverseuse (+) dudit comparateur $Z_1$ étant reliée au point G, et d'autre part, par un pont R26—R27 de façon à établir une référence Y à l'entrée inverseuse (—) d'un comparateur $Z_2$, l'entrée non inverseuse (+) dudit comparateur $Z_2$ étant reliée également au point G. Les ponts R24—R25 et R26—R27 sont ainsi proportionnées que les potentiel de référence Y est supérieur au potentiel de référence X. Les sorties respectives des comparateurs $Z_1$ et $Z_2$ sont dénommées A et B; A est appliqué à l'alimentation positive $V^+$ d'un double oscillateur 50 des fréquences inférieurs FI et supérieures FS commandées sur commutation des transistors Q1 à Q4 et Q5 à Q8; B est appliqué à l'alimentation négative $V^-$ du double oscillateur 50.

Sur les sorties A et B est disposé un pont diviseur R30, R31 dont le point milieu fournissant une référence comprise entre les tensions de A et de B est appliqué au + d'un amplificateur linéaire $Z_3$ bouclé sur le — avec un gain égal à une unité. La sortie de l'amplificateur $Z_3$ découplée par les condensateurs C3 et C4 est appliquée au double oscillateur 50 afin de fournir à celui-ci une tension à basse impédance comprise entre $V^+$ et $V^-$. Le double oscillateur 50 comporte deux sorties délivrant deux signaux de fréquence sinusoïdale sur deux résistances R36 et R37 reliées à la bas du transistor Q13 servant de mélangeur de fréquences et de générateur des fréquences mélangées modulant le courant de ligne par la double liaison avec le pont de Graetz, d'une part entre le collecteur de Q13 avec le point commun à D3 et D5 et d'autre part à travers la résistance R38 reliée à la masse et communiquant avec le point commun à D4 et à D6.

Un comparateur Z4 reçoit sur son entrée inverseuse (—) la tension en provenance de A et sur son entrée non inverseuse (+) une référence prélevée entre des résistances R28 et R29 disposées entre la tension régulée de Q9 et la masse. Une sortie C du comparateur Z4 est portée à un potentiel positif lorsque A est négatif et à un potentiel négatif lorsque A est positif. Ces résultats sont fonction des valeurs respectives de R28 et R29 et des valeurs du pont R24—R25. Ces sorties A et C sont branchées aux entrées d'un double commutateur respectivement les transistors Q12—Q11 et le transistor Q10. Les transistors Q10 et Q11 sont montés en série avec les diodes D12 et D13 et laissent passer le courant dans les deux sens suivant le sens collecteur-émetteur lorsqu'ils sont saturés. Les résistances R32—R33 associées à la base du transistor Q10 polarisent celle-ci de telle sorte que lorsque la sortie C est négative le transistor Q10 est bloqué et lorsque le sortie C est positive le transistor Q10 est saturé. L'ensemble de transistors Q12—Q11 et les résistances R34 et R35 est monté de telle sorte que lorsque Q12 est saturé Q11 est bloqué et vice-versa. Il en résulte que la sortie A négative provoque la saturation de Q11 et A positif provoque le blocage de Q11. le double commutateur est disposé entre les bornes 20 et 10. En parallèle sur le double-commutateur est éventuellement disposée une résistance R40, permettant le dosage d'écoute pendant la composition des numéros.

Le principe de fonctionnement du clavier est le suivant.

1er cas Bornes L2+ et L1—

a) Le combiné est en position de veille. Le combiné étant accroché les contacts k1 et k2 sont ouverts. Seule la sonnerie S peut détecter une modulation de courant au travers du condensateur C1 et de la résistance R1.

b) Le combiné est en position décrochée ou de conversation. Aucune touche 1, 2...0 n'est enfoncée. Les contacts k1 et k2 sont fermés. Le courant circule depuis la borne L2, traverse la diode D3 et alimente le transistor Q9 et la diode Zener D7. La matrice de commutation est sans action les lignes n'étant pas parcourues par un courant, le point G étant à zéro volt, les transistors Q1 à Q4 étant bloqués ainsi que les transistors Q5 à Q8 pour la raison que leurs émetteurs et leurs bases sont au même potentiel. Par contre les amplificateurs différentiels Z1, Z2, Z3, Z4 sont alimentés par le régulateur de tension Q9 ainsi que les points de référence X et Y. Il en résulte qu'en l'absence de touche enfoncée les sorties A et B des comparateurs Z1 et Z2 sont au potentiel négatif. En effet, le potentiel de G est zéro et le potentiel de X est positif. Le potentiel de sortie A est au potentiel inverse de celui de l'entrée inverseuses (—) donc au potentiel négatif. De même pour la sortie B du comparateur Z2. Puisque les potentiels de A et B sont négatifs le double oscillateur 50 est bloqué car son alimentation V+ est au potentiel négatif. La sortie C du comparateur Z4 est au potentiel positif saturant le commutateur Q10. Celui-ci étant conducteur le courant de conversation circule depuis la borne L2 jusqu'à la borne L1 en passant par le contact k1, le microphone M, le transformateur T donc l'écouteur E, la borne 20, le transistor Q10, la diode D12, la borne 10, le contact k2, le potentiomètre P et la borne L1.

c) Le combiné est en position décrochée, le numéro est composé, une seule touche est enfoncée à la fois.

Par exemple la touche 5 est enfoncée. Au croisement de la ligne et de la colonne de la touche 5 un contact s'établit entre la colonne et la ligne. Le courant d'alimentation fourni par le transistor Q9 traverse d'une part la résistance R17 et d'autre part la résistance R21 créeant ainsi une différence de potentiel entre l'émetteur et la base du transistor Q6 puisque la colonne en contact avec la ligne est à la masse par la diode D9 et par les résistances R13 et R24. Le transistor Q6 est par conséquent saturé ce qui permet de porter à la basse impédance du transistor Q9 l'extrémité d'une des positions FS commandant le double oscillateur 50. En même temps le courant existant sur la base du transistor Q2 sature celui-ci au traverse de la résistance R6 et l'une des fréquences FI est générée dans le double oscillateur 50 par commutation du transistor Q2 en mettant à la masse l'un des plots FI à travers le trajet collecteur-émetteur du transistor Q2. L'enfoncement d'une touche provoque par conséquent la commutation respective de chacune des deux résistances du double oscillateur 50 autorisant l'emission d'une fréquence FI et d'une fréquence FS.

En même temps que cette action, le courant dans la résistance R24' porte le point G à une tension supérieure à la tension de la référence X qui fait basculer le comparateur Z1 dont la sortie A est portée au potentiel positif alors que la sortie B du comparateur Z2 reste au potentiel négatif.

La tension de A positif appliquée au V+ du double oscillateur 50 et la tension de B négatif appliquée au V⁻ du double oscillateur 50 sont conformes à l'alimentation normale de celui-ci. Les deux fréquences qu'engendre le double oscillateur sont mélangées au traverse des résistances R36 et R37 par le générateur de courant Q13—R38. Le courant multifréquence ainsi créé dans le collecteur de Q13 module le courant de ligne par dérivation depuis 40—D3—Q13—R38—masse—D4—10—P et retour à L1. Afin de réaliser l'effet antilocal consistant à limiter le brouillage de l'écouter E lors d'une émission de deux fréquences le double commutateur Q10—Q11 est bloqué. En effet la sortie A est positive et le transistor Q12 saturé provoque le blocage du transistor Q11. Par ailleurs la sortie C est au potentiel négatif et le transistor Q10 est bloqué. Ainsi les deux fréquence FI et FS du code sont seules émises pour composer le numéro.

d) Le combiné est en position décrochée; fausses manoeuvres pour composer le numéro, deux ou plusieurs touches sont enfoncées à la fois.

Cette fausse manoeuvre a pour effet d'augmenter le courant que traverse la résistance R24'. La tension développée au point G deivent alors supérieure aux tensions de référence X et Y ce qui entraîne les sorties A et B au potentiel positif et la sortie C au potentiel négatif. Il en résulte que le double oscillateur 50 ne peut fonctionner même avec les transistors Q1 à Q8 commutés. Comme les sorties du double oscillateur 50 sont aussi au potentiel positif le générateur de courant Q13 consommerait sur la ligne et pour l'éviter la diode D14 reliée à la sortie C bloque le transistor Q13. De plus le double commutateur Q10—Q11 est également bloqué.

2ème cas Bornes L2— et L1+

Le fonctionnement reste identique au 1er cas, sauf pour le chemin du courant ligne en position décrochée ou de conversation.

En effet, ce courant ligne ne passe plus par le transistor Q10 à cause du sens de la diode D12 mais passe par le transistor Q11. Le chemin du courant ligne est le suivant:

L1—P—k2—10—Q11—D13—20—T—M—
k1 et L2.

Sur la figure 2 on voit en détail le double oscillateur 50. Il est réalisé en circuit intégré hybride en couches minces bâti autour d'une plaquette d'amplificateurs opérationnels quadruple 60, 61, 62, 63. Les amplificateurs différentiels 60 et 63 sont identiques et servent respectivement avec les résistances R41 à R50 associées aux condensateurs C4, C5 et les résistances R51 à R60 associées aux condensateurs C6, C7 à réaliser deux filtres actifs à contre-réaction multiple. Les fonctions de transfert du deuxième ordre ont pour pôles l'une des fréquences inférieures FI et l'une des fréquences supérieures FS et sont modifiables par la commutation des résistances R44 à R47 à la masse et R54 à R57 à la basse impédance de l'alimentation.

Les fréquences FI sont de 697 Hz, 770 Hz, 852 Hz, 941 Hz.

Les fréquences FS sont de 1209 Hz, 1336 Hz, 1477 Hz, 1633 Hz.

Les amplificateurs linéaires 61 et 62 ont pour rôle d'assurer un gain en sortie différent pour chacun d'eux, l'amplificateur 62 ayant un gain supérieur à l'amplificateur 61 dans le but de préaccentuation des fréquences supérieurs. Ils ont aussi pour rôle d'assurer l'inversion de phase nécessaire pour faire fonctionner l'ensemble des amplificateurs 60—61 et 62—63 en oscillateurs. Un double écretage dans le but de stabiliser le niveau des signaux réinjectés par les résistances R41 et R51 est réalisé au moyen des diodes D20 à D23.

Les entrées+des amplificateurs différentiels 60—61—62—63 reçoivent leur tension en provenance de Z3, tension intermédiaire entre V⁺ et V⁻ nécessaire pour réaliser la tension de référence. Sa valeur est positionnée de façon à minimiser la consommation de l'alimentation de ligne sans distordre les deux fréquences d'émission.

Les tensions d'alimentation des amplificateurs 60—61—62—63 sont V⁺ et V⁻ fournies par les sorties A et B et permettent de commander la mise en route du double oscillateur 50. Les sorties du double oscillateur 50 sont reliées aux résistances R36 et R37.

Le clavier d'appel selon l'invention permet par des moyens d'électronique analogique de réaliser les différentes fonctions exigées par ce type d'appareil dont le clavier est interchangeable avec un poste téléphonique usuel sans nécessiter ni équipment extérieur au poste ni alimentation séparée.

Les applications sont du domaine des télécommunications téléphoniques.

## Revendication

Clavier d'appel de poste téléphonique automatique comportant un clavier comprenant un ensemble de lignes et de colonnes conductrices et au moins dix touches situées au point d'intersection desdites lignes et colonnes et apte chacune à mettre en contact une colonne parmi quatre avec une ligne parmi quatre, dont les colonnes sont alimentées au travers d'un régulateur de tension (Q9, R3, D7) possédant une sortie à basse impédance et d'un pont de Graetz (D3, D4, D5, D6) mis à la masse alimentant ledit régulateur suivant l'une de ses paires de bornes, la ligne téléphonique (L₁, L₂) alimentant ledit pont suivant l'autre de ses deux paires de bornes et comportant en amont dudit pont (D3, D4, D5, D6) la sonnerie (S) de l'appareil et en aval des circuits de microphone (M) et d'écouteur (E), chacune desdites lignes comportant à l'une de ses extrémités un commutateur à transistor (Q1, Q2, Q3, Q4) apte à relier à la masse une résistance correspondante d'un double oscillateur (50) émettant l'une des quatre fréquences inférieures FI et chacune desdites colonnes comportant à l'extrémité opposée dudit régulateur de tension (Q9, R3, D7) un commutateur à transistor (Q5, Q6, Q7, Q8) apte à relier à la basse impédance dudit régulateur (Q9, R3, D7) une résistance correspondante dudit double oscillateur (50) émettant en outre l'une des quatre fréquences supérieures FS, l'émission du groupe des deux fréquences, inférieure FI et supérieure FS, n'étant rendue possible que par le contact de ladite touche (1, 2, 3, 4, 5, 6, 7, 8, 9, 0), caractérisé en ce que les autres extrémités desdites lignes sont reliées aux entrées non inverseuses + d'un premier et d'un deuxième comparateurs (Z1, Z2) en parallèle dont les entrées inverseuses — des comparateurs (Z₁, Z₂) sont chacune reliée à la sortie d'un diviseur de tension (R24, R25) respectivement (R26, R27) alimenté par la sortie basse impédance dudit régulateur de tension (Q9, R3, D7) et dont les sorties respectives ne constituent l'alimentation en tension positive et négative dudit double oscillateur (50) que lorsqu'une seule touche (1,...0) est enfoncée, lesdits premier et deuxième comparateurs (Z1, Z2) fournissant tous les deux une tension négative inhibitant le double oscillateur (50) lorsqu'aucune touche (1,...0) n'est enfoncée et fournissant tous les deux une tension positive inhibitant le double oscillateur (50) lorsque par mégarde deux touches (1,...0) sont enfoncées à la fois, et en ce qu'un troisième comparateur (Z4), recevant sur son entrée inverseuse — le signal de sortie dudit premier comparateur (Z1), son entrée non inverseuse + étant reliée au point commun de deux résistances (R28, R29) connectées d'une part à la masse et connectées d'autre part à la sortie basse impédance dudit régulateur de tension (Q9, R3, D7), délivre une tension de blocage ou de conduction respectivement selon qu'au moins une touche (1,...0) est enfoncée ou relâchée, à une premier commutateur (Q10) à transistor disposé entre le pont de Graetz et le circuit de microphone en série dans l'une des fils (L1) de ladite ligne téléphonique de manière à conduire dans un premier sens microphone-pont de Graetz et en ce que ledit premier comparateur (Z1) délivre une tension de blocage ou de conduction respectivement selon qu'au moins une couche (1,...0) est enfoncée ou relâchée à un deuxième commutateur (Q11, Q12) à transistor disposé en parallèle sur ledit premier commutateur (Q10) de manière à conduire dans le sens inverse audit premier sens.

## Patentanspruch

Wahltastatur eines automatischen Fernsprechapparatus mit einer Tastatur, die eine Einheit aus Zeilenleitern und Spaltenleitern und mindestens zehn Tasten aufweist, die sich am Kreuzungspunkt dieser Zeilen und Spalten befinden und jede dazu in der Lage ist, eine von vier Spalten mit einer von vier Zeilen in Verbindung zu setzen, wobei die Spalten über einen Spannungsregler (Q9, R3, D7), der einen Ausgang mit niedriger Impedanz besitzt, und über eine Graetz-Brücke (D3, D4, D5, D6) versorgt werden, die mit Masse verbunden ist und den Regler über eines ihrer Klemmenpaare versorgt, während die Telephonleitung (L₁, L₂), die Brücke über deren zweites Klemmenpaar vorsorgt und vor dieser Brücke (D3, D4, D5, D6) das Läutwerk (S) des Apparats und hinter ihr die Mikrophon- (M) und Höhrerschaltkreise (E) aufweist, wobei jede der Zeilen an einem ihrer Enden einen Transistorschalter (Q1, Q2, Q3, Q4) aufweist, der je einen Widerstand eines doppelten Oszillators (50), der eine der vier niedrigeren Frequenzen FI aussendet, an Masse legen kann, und jede der Spalten am diesem Spannungsregler (Q9, R3, D7) entgegengesetzten Ende einen Transistorschalter (Q5, Q6, Q7, Q8) aufweist, der an die niedrige Impedanz dieses Reglers (Q9, R3, D7) je einen Widerstand des doppelten Oszillators (50), der außerdem eine der vier höheren Frequenzen FS aussendet, anschließen kann, wobei die Aussendung der Gruppe der zwei Frequenzen, der niedrigeren FI und der höheren FS, nur möglich wird durch den Kontakt der Taste (1, 2, 3, 4, 5, 6, 7, 8, 9, 0) dadurch gekennzeichnet, daß die anderen Enden der Zeilen mit den nicht invertierenden Eingängen + eines ersten und eines zweiten Komparators (Z1, Z2) in Parallelschaltung verbunden sind, dern invertierende Eingänge — je mit dem Ausgang eines Spannungsteilers (R24, R25) bzw. (R26, R27) verbunden sind, die je vom niederohmigen Ausgang des Spannungsreglers (Q9, R3, D7) vorsorgt werden und deren jeweilige Ausgänge die Vorsorgung mit positiver und negativer Spannung des doppelten Oszillators (50) nur dann bewirken, wenn eine einzige Taste (1,...0) gedrückt ist, wobei sowohl der erste als auch der zweite Komparator (Z1, Z2) eine negative Spannung liefert, die den doppelten Oszillator (50) blockiert, wenn keine Taste (1,...0) gedrückt ist, und beide Komparatoren eine positive Spannung liefern, die den doppelten Oszillator (50) blockiert, wenn aus Versehen zwei Tasten (1,...0) gleichzeitig gedrückt werden, und daß ein dritter Komparator (Z4), der an seinem invertierenden Eingang — das Ausgangssignal des ersten Komparators (Z1) zugeführt erhält, wobei sein nicht invertierender Eingang + mit dem gemeinsamen Punkt zweier Widerstände (R28, R29) verbunden ist, die einerseits mit Masse und andererseits mit dem niederohmigen Ausgang des Spannungsreglers (Q9, R3, D7) verbunden sind, eine Blockieroder Leitspannung, je nachdem ob mindestens eine Taste (1,...0) gedrückt oder losgelassen ist, an einen ersten Transistorschalter (Q10) liefert, der sich zwischen der Graetz-Brücke und dem seriengeschalteten Mikrophonschaltkreis in einem der Drähte (L1) der Telephonleitung befindet, so daß er in einer ersten Richtung vom Mikrophon zur Graetz-Brucke leitet, und daß der erste Komparator (Z1) eine Blockier- oder Leitspannung, je nachdem, ob mindestens eine Taste (1,...0) gedrückt oder losgelassen ist, an einen zweiten Transistorschalter (Q11, Q12) liefert, der in Parallelschaltung zum ersten Transistorschalter (Q10) angeordnet ist, so daß er in der zur ersten Richtung entgegengesetzten Rich-tung leitet.

## Claim

A keypad for an automatic telephone set comprising a keypad with a number of conductive rows and columns, and at least ten keys situated at the intersection point of said rows and columns and each being able to bring into contact one out of four columns with one out of four rows, the columns being supplied through a voltage regulator (Q9, R3, D7) having a low impedance output and through an earthed Graetz bridge (D3, D4, D5, D6) supplying said regulator along one of its pairs of terminals, whereas the telephone line (L₁, L₂) supplies said bridge along the other of its two pairs of terminals, and comprising downstream of said bridge (D3, D4, D5, D6) the ringing circuit (S) of the set and upstream the microphone (M) and loudspeaker circuits (E), each of said rows comprising at one of its ends a transistorized switch (Q1, Q2, Q3, Q4) able to connect with earth a corresponding resistance of a double oscillator (50) which emits one of the four lower frequencies FI, and each of said columns comprising at the end which is opposite to said voltage regulator (Q9, R3, D7) a transistorized switch (Q5, Q6, Q7, Q8) which is able to connect with the low impedance of said regulator (Q9, R3, D7), a corresponding resistance of said double oscillator (50) which further emits one of the higher frequencies FS, the emission of the group of two frequencies, lower FI and higher FS, only being rendered possible by the contact of said key (1, 2, 3, 4, 5, 6, 7, 8, 9, 0), characterized in that the other ends of said rows are connected in parallel to the non-inverting inputs + of a first and a second comparator (Z1, Z2), whose inverting inputs — are connected to the output of a voltage divider (R24, R25, respectively R26, R27) supplied by the low impedance output of said voltage regulator (Q9, R3, D7) and whose respective outputs constitute a positive and negative voltage supply source of said double oscillator (50) only when a single key (1,...0) is depressed, said first and second comparators (Z1, Z2) both supplying a negative voltage which inhibits the double oscillator (50) when no key (1,...0) is depressed and both supplying a positive voltage which inhibits the double oscillator (50) when, by inadvertance two keys (1,...0) are pressed simultaneously, and in that a third comparator (Z4) receiving on its inverting input — the output signal of said first comparator (Z1), its non-inverting input + being connected to the common point of two resistances (R28, R29) connected on the one hand with earth and connected on the other hand to the low impedance output of said voltage regulator (Q9, R3, D7) delivers an inhibition or a conduction voltage respectively depending on whether at least one key (1,...0) is depressed or released, to a first transistorized switch (Q10) disposed between the Graetz bridge and the microphone circuit in series in one of the wires (L1) of said telephone line so as to conduct in a first direction microphone-Graetz bridge, and in that said first comparator (Z1) delivers an inhibition or a conduction voltage respectively depending on whether at least one key (1,...0) is depressed or released, to a second transistorized switch (Q11, Q12) disposed in parallel on said first comparator (Q10) so as to conduct in the opposite direction to said first direction.

FIG.1

FIG. 2